# EUROPEAN PATENT APPLICATION

(11) **EP 4 190 486 A1**
(43) Date of publication of application: **07.06.2023**
(21) Application number: 22210532.2
(22) Date of filing: 30.11.2022
(51) Int. Cl.: B23P 15/40, B26B 9/00, B26B 21/00, B23K 9/00

(54) **METHOD OF MANUFACTURING A KNIFE BLADE AND KNIFE BLADE**

(30) Priority: 01.12.2021 FI 20216231
(71) Applicant: Fiskars Finland Oy Ab, 02150 Espoo (FI)
(72) Inventor: Sokka, Mika, 02150 Espoo (FI); Heine, Mikko, 02150 Espoo (FI); Huang, Tao, 02150 Espoo (FI)
(74) Representative: Kolster Oy Ab

(57) **Abstract**

The invention relates to a of manufacturing a knife blade and to a knife blade. In the method, a blade preform (1) of a first material (2) is prepared. A second material (5) which is harder than the first material (2) is deposited on an edge (3) of the blade preform (1) by arc welding. The deposited second material (5) is sharpened to prepare a knife blade with a sharp edge.

## Description

### BACKGROUND OF THE INVENTION

### FIELD OF THE INVENTION

This invention relates to a method of manufacturing a knife blade and to a knife blade. More particularly, the invention relates to a knife blade with a sharp edge of a hard material.

### DESCRIPTION OF PRIOR ART

Previously there is known a knife blade having a blade preform manufactured of a first material. In order to obtain a durable and hard knife edge, an edge of the blade preform is manufactured of a second material, which is harder than the first material.

In this known knife blade, the second material has been provided by utilizing laser deposition. In laser deposition the second material is introduced as powder which is deposited onto the edge of the blade preform by use of a laser.

A challenge with the prior art solution is that use of powder requires special attention in order to ensure that the powder ends up in correct amounts at the desired locations. If this is not accomplished, excess amounts of powder will be used and the required properties of the knife blade may not be achieved. In any case, laser deposition onto an edge of a blade preform is a relatively slow process .

### SUMMARY OF THE INVENTION

An object of the present invention is to solve the above-mentioned drawback and to provide an efficient manufacturing method and knife blade. This object is achieved with a method according to independent claim 1 and a knife blade according to independent claim 12.

When the second material is introduced by arc welding it becomes possible to introduce the second material exactly to the correct desired position and exactly in a desired amount of material.

Preferred embodiments of the invention are disclosed in the dependent claims.

### BRIEF DESCRIPTION OF DRAWINGS

In the following the present invention will be described in closer detail by way of example and with reference to the attached drawings, in which
Figure 1 illustrates deposition to an edge,
Figure 2 illustrates an alternative solution for deposition to an edge,
Figure 3 illustrates a rod used in arc welding, and
Figure 4 illustrates manufacturing of a knife blade.

### DESCRIPTION OF AT LEAST ONE EMBODIMENT

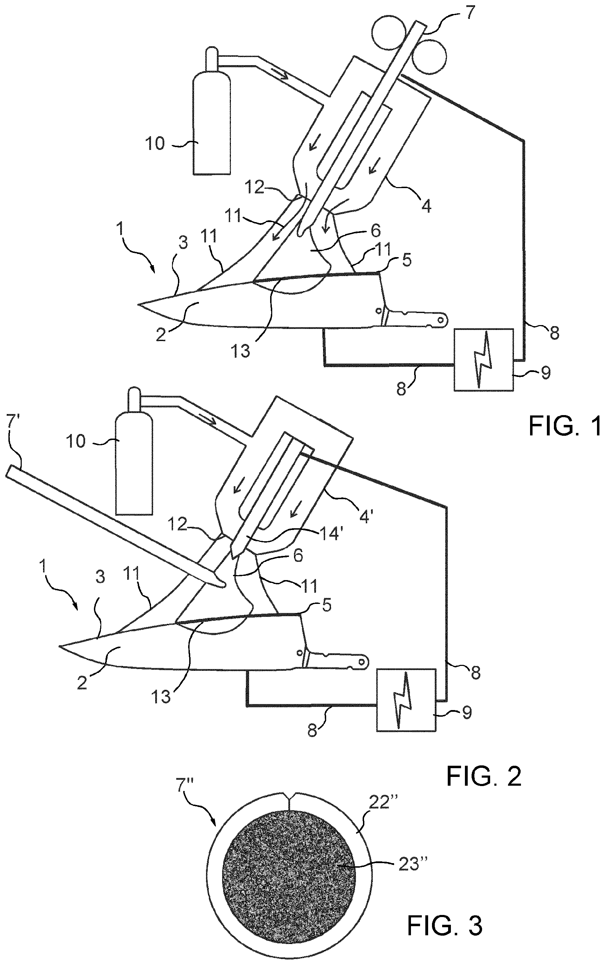

Figure 1 illustrates deposition to an edge. In Figure 1 a blade preform 1 of a first material 2 has been prepared. In the following it is by way of example assumed, that the blade preform 1 has already been shaped to, at least roughly, have the final shape of a knife blade. This is, however, not necessary in all embodiments, as in praxis, it is also possible to first carry out the illustrated deposition, and only subsequently, to shape the deposited blade preform to obtain the desired shape of the blade.

The blade preform 1 is in the illustrated example arranged in a position where an edge 3 of the blade preform 1 faces upwards towards an arc welding tool 4. The arc welding tool 4 deposits a second material 5 on the edge 3 of the blade preform 1. The second material 3 is harder than the first material 2. In this example, the second material 5 is fed as a rod 7 via the arc welding tool 4 to the edge 3 of the blade preform 1. In this connection the term "rod" is used to indicate a welding wire or welding rod as a general filling material irrespectively of the diameter or other properties. Consequently, a "rod" may be wound on a reel from where it is drawn to be used in arc welding or alternatively, it may be implemented in form of a straight stick, as illustrated by way of example in Figures 1 and 2.

The deposition is in Figure 1 carried out by creating an arc 6 between the blade preform 1 and the arc welding tool 4. More precisely, in Figure 1 the electric arc is created between the blade preform 1 and an end of the rod 7 which is fed through the arc welding tool 4. For this purpose, the blade preform 3 and the rod 7 are connected by cables 8 to a power source 9. Due to the electric power provided by the power source, an end of the rod melts and second material 5 from the rod is deposited on the edge 3 of the blade preform 1 by means of the electric arc.

Additionally, a gas source 10 containing a shielding gas 11 is utilized in Figure 1. The shielding gas may be an inert gas, such as argon, or alternatively an active gas. The gas 11 is fed from an orifice 12 of the arc welding tool 4 towards the blade preform 1 to isolate the location 13 of the blade preform where arc welding is implemented from surroundings by the shielding gas 11.

Figure 2 illustrates an alternative solution for deposition to an edge. The solution of Figure 2 is very similar to the one explained in connection with Figure 1. Therefore, in the following, the embodiment of Figure 2 is mainly explained by pointing out the differences between these embodiments.

In Figure 2, the arc welding is implemented with an arc welding tool 4' of a different type. In this example the rod 7' of the second material 5 is not used to create the arc 6, as in Figure 1. Instead, the arc welding tool 4' of Figure 2 is provided with an electrode 14' which is connected to the power source 9 via one of the cables. Consequently, the arc 6 is created between this electrode 14' and the blade preform 1.

The rod 7' of the second material 5 may be fed to the edge 3 of the blade preform 1 independently of the arc welding tool 4', as shown in Figure 2. Alternatively, the arc welding tool 4' may be provided by a feeding device feeding the rod 7' towards the edge 3, however, also in this case the rod is not utilized to create the electric arc.

Figure 3 illustrates a rod 7" used in arc welding. A rod 7" as illustrated in Figure 3 may utilized in both of the deposition solutions illustrated in Figures 1 and 2.

The illustrated rod 7" is a filled rod, which comprises a solid cover 22" with a core 23" filled with powder or granulate, for instance. The filling may include metallic powder or granulate, alloys and arc stabilizers, for instance, each of which offer distinct benefits such as lowering oxidation, providing higher impact strengths and reducing silicon deposits in the final weld. In particular, the material of the cover and the material in the core together form the second material 5. Consequently, due to the metal cored rod, it is very easy to provide exactly the desired compounds to form the second material.

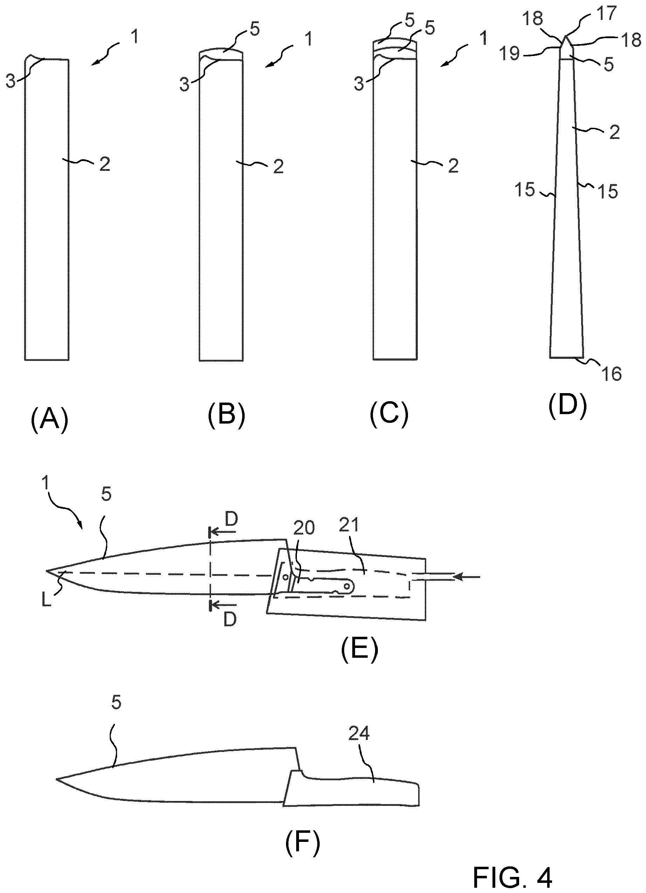

Figure 4 illustrate manufacturing of a knife blade. In Figure 4 the method steps A to D illustrate the blade in cross-sections from the same viewing angle such that step D illustrates the cross-section of the (almost) finalized blade along line D - D of the blade illustrated in step E. This line D - D is perpendicular to the longitudinal direction L of the blade.

In step A, a blade preform 1 is prepared by separating the blade preform 1 from a material sheet of a first material. This step may involve cutting loose the blade preform from the material sheet by stamping, for instance, due to which the shape of the edge 3 is slightly disrupted (not entirely smooth or planar).

In step B second material 5 is deposited on the edge 3 of the blade preform 1. This deposition is implemented by arc welding as illustrated in Figure 1 or in Figure 2, for instance.

In some implementations arc welding may be used to deposit a sufficiently thick layer of the second material 5 on the edge 3 in one single deposition step B only. However, in the example of Figure 3 it is assumed that a second layer of the second material 5 needs to be deposited in a second subsequent deposition step, as illustrated in step C. In praxis it may in many implementations bee necessary to have an even larger amount of deposition steps to obtain a second material layer 5 on the edge 3 which is thick enough.

In step D the blade preform 1 is sharpened to obtain a sharp cutting edge. In the illustrated example, the sharpening has been carried out in such a way, that in the finished blade, opposite first surface sections 15 of the knife blade made of the first material 2 extend from a back edge 16 of the knife blade towards the sharp edge 17 of the knife blade and approach each other in the direction towards the sharp edge 17. Opposite second surface sections 18 of the knife blade made of the second material 5 extend towards the sharp edge 17 of the knife blade and approach each other in the direction towards the sharp edge 17. A transition 19 from the first surface sections 15 to the second surface sections 18 is provided in the second material 5, where the first and surface sections 15, 18 on opposite sides of the knife blade form an angle with each other. In praxis, the first and second surface sections 15, 18 may be planar surfaces in a direction perpendicular to a longitudinal direction L of the knife blade, as illustrated in step D of Figure 3. With such a solution, having the transition 19 in the second 5 material which is harder than the first material 2, excellent properties are obtained for the knife blade.

The dimensions of the blade may vary depending on the intended use of the knife blade. One alternative well suited for kitchen knives, for instance, is that the opposite second surface sections 18 of the knife blade form an angle of 25°-35° at the sharp edge 17. In that case the thickness of the blade may be about 0,3mm at the transition 19.

In the illustrated example it has for step D by way of example been assumed that the blade preform is sharpened on both sides of the blade preform. This is, however, only by way of example. In some implementations it is sufficient to sharpen only one side of the blade to obtain a Japanese sharpening, for instance. In that case a transition 19 from the first surface section 15 to the second surface section 18 may be provided in the second material 5 on only one side of the blade, and on the opposite side (non-sharpened side) of the blade the first surface section 15 may continue smoothly as the second surface section 18 without any angle between the first surface section and the second surface section.

In step E a section 20, such as a back end of the blade preform 1 with the deposited second material 5, is introduced into a mould 21 subjecting the section 20 to injection moulding to produce a handle attached to the blade preform 1. During injection moulding melt plastic material may be introduced into the cavity of the mould.

In praxis there are several alternatives to provide a handle to the back end of the blade preform. A first alternative is to attach a handle of wood or a plastic material, for instance, to section 20 in step E by riveting, for instance. In that case the handle may include two separate handle sections arranged on opposite sides of the section 20 after which the rivets are arranged to protrude trough both handle sections and the section 20, such that section 20 is sandwiched between the handle sections.

A second alternative is to produce a handle of wood or a plastic material, for instance, to include a slot. In that case section 20 of the blade preform may be introduced into the slot where it attaches to the handle by friction.

A third alternative is to produce the handle of a material which can be attached to section 20 of the blade preform by welding. In that case the handle may include two handle sections on plastic material, for instance, which are arranged on opposite sides of the section 20 such that they may be in contact with each other trough openings in section 20 or along the outer edges of section 20. This facilitates attachment of the handle sections to each at the contact points by welding.

In step F, the finalized knife, such as a kitchen knife with a handle 24, has been removed from the mould.

The above-described method steps are excellent for producing a blade for a kitchen knife, for instance. The materials used may vary and additionally, more production steps may be used than illustrated in Figure 4.

If the intention is to manufacture a knife with a steel blade, for instance, the blade preform may be cut from a stainless-steel coil, which in that case is the first material 3. The second material 5 may in that case contain a Cr-Ni-Fe alloy which ensures a very hard edge. After the deposition step C of Figure 4, the blade preform may be subjected to heat treatment prior to step D where sharpening is carried out. In that case the heat treatment may be implemented in a temperature of about 1080°C for 50 minutes in a vacuum furnace, for instance. Subsequently, the blade preform may be subjected to a temperature of about 250° for 3 hours.

Once the hardening by the heat treatment is finalized, the blade preform is sharpened in step D of Figure 4, subjected to deburr and finally, the handle is provided in step E as previously explained.

If the intention is to manufacture a knife with a titanium blade, the blade preform may be cut out from a sheet of titanium, which in that case is the first material 3. The second material 5 may in that case contain an Al-C-Ti alloy providing an excellent wear-off resistant edge. In case of a titanium blade, heat treatment is not necessary, but instead the manufacturing process may after the arc welding proceed as explained in connection with Figure 4.

It is to be understood that the above description and the accompanying figures are only intended to illustrate the present invention. It will be obvious to a person skilled in the art that the invention can be varied and modified without departing from the scope of the invention.

## Claims

1. A method of manufacturing a knife blade, comprising:
preparation of a blade preform (1) of a first material (2), **characterized in that**
depositing a second material (5) which is harder than the first material (2) on an edge (3) of the blade preform (1) by arc welding, and
sharpening (D) the deposited second material (5) to prepare a knife blade with a sharp edge.

2. The method according to claim 1, wherein the arc welding comprises
creating an arc (6) between the blade preform (1) and an arc welding tool (4, 4'), and
introducing the second material (5) to the edge (3) of the preform in the form of a rod (7, 7', 7").

3. The method according to claim 1 or 2, wherein the arc welding comprises
feeding a rod (7, 7") of the second material (5) via an arc welding tool (4) to the edge (3) of the preform, and
creating an arc (6) between the blade preform (1) and the rod (7, 7") fed from the arc welding tool (4).

4. The method according to claim 1 or 2, where the arc welding comprises
creating an arc (6) between an electrode (14') of an arc welding tool (4') and the blade preform (1), and
feeding a rod (7', 7") of the second material (5) into the arc (6) at the edge (3) of the blade perform (1).

5. The method according to one of claims 2 to 4, wherein the rod (7") is a filled rod.

6. The method according to claim 5, wherein the filled rod (7") is filled with powder or granulate.

7. The method according to one of claims 1 to 6, comprising
feeding shielding gas (11) from an orifice (12) of the arc welding tool (4) towards the blade preform (1) to isolate the location (13) of the blade preform where arc welding is implemented from surroundings by the shielding gas (11).

8. The method according to one of claims 1 to 7, wherein the preparation of the blade preform (1) of a first material (2) involves (A) separating the blade preform (1) from a sheet of the first material (2).

9. The method according to one of claims 1 to 8, wherein the blade preform (1) with the deposited second material (5) is heat treated before said sharpening (D).

10. The method according to one of claims 1 to 9, wherein a handle (24) is attached to a section (20) of the blade preform (1) with the deposited second material (5).

11. The method according to one of claims 1 to 9, comprising attaching a handle to a section (20) of the blade preform (1) with the deposited second material (5) by injection molding, by riveting, by welding or by introducing the section (20) into a slot of the handle to provide attachment by friction.

12. A knife blade comprising:
a blade section of a first material (2), **characterized in that**
an edge (3) of the blade section is provided with an arc welded layer of a second material (5) which is shaped as a sharp edge (17), the second material (5) is harder than the first material (3).

13. The knife blade according to claim 12, wherein
opposite first surface sections (15) of the knife blade made of the first material (2) extend from a back edge (16) of the knife blade towards the sharp edge (17) of the knife blade and approach each other in the direction towards the sharp edge (17),
opposite second surface sections (18) of the knife blade made of the second material (5) extend towards the sharp edge (17) of the knife blade and approach each other in the direction towards the sharp edge (17), and
a transition (19) from the first surface sections (15) to the second surface sections (18) is provided in the second material (5), where the first and second surface sections (15, 18) on opposite sides of the knife blade form an angle with each other.

14. The knife blade according to claim 12, wherein
opposite first surface sections (15) of the knife blade made of the first material (2) extend from a back edge (16) of the knife blade towards the sharp edge (17) of the knife blade and approach each other in the direction towards the sharp edge (17),
opposite second surface sections (18) of the knife blade made of the second material (5) extend towards the sharp edge (17) of the knife blade and approach each other in the direction towards the sharp edge (17), and
a transition (19) from the first surface sections (15) to the second surface sections (18) is provided on at least one side of the knife blade in the second material (5), where the first and second surface sections (15, 18) on opposite sides of the knife blade form an angle with each other.

15. The knife blade according to claim 13 or 14, wherein in a cross-section of the knife blade, in a direction (D-D) perpendicular to a longitudinal direction (L) of the knife blade, the first and second surface sections (15, 18) are planar surfaces.
